Europäisches Patentamt

European Patent Office

Office européen des brevets

(19)

(11) Veröffentlichungsnummer: **0 501 302 A1**

# (12) EUROPÄISCHE PATENTANMELDUNG

(21) Anmeldenummer: **92102806.4**

(22) Anmeldetag: **20.02.92**

(51) Int. Cl.5: **B08B 9/08**, B65G 21/18, B65G 15/14, //B08B101/08

(30) Priorität: **23.02.91 DE 4105720**

(43) Veröffentlichungstag der Anmeldung: **02.09.92 Patentblatt 92/36**

(84) Benannte Vertragsstaaten: **CH DE ES FR GB IT LI**

(71) Anmelder: **Seitz Enzinger Noll Maschinenbau Aktiengesellschaft**

Neckarauer Strasse 140-162 Postfach 645 **W-6800 Mannheim 1(DE)**

(72) Erfinder: **Purper, Gunther, Dipl.-Ing.**
**Schwedenstrasse 1**
**W-6551 Rüdesheim(DE)**
Erfinder: **Rothenstein, Ernst**
**Rheinstrasse 75**
**W-6845 Gross-Rohrheim(DE)**

(54) **Vorrichtung zum Überkopf-Behandeln von Flaschen oder dergleichen Behälter.**

(57) Die Vorrichtung, insbesondere Rinser oder Kopfraum-Sterilisator, besteht aus einem mit einem zwischen einer Einlaufstelle (2) für die zu behandelnden Flaschen (1) und einer Auslaufstelle (4) für die behandelten Flaschen (1) umlaufenden und von wenigstens einem Paar von Klemmbackenketten (19) gebildeten Transportsystem zur klemmenden Mitnahme der Flaschen auf einer sich zwischen der Einlaufstelle (2) und der Auslaufstelle (4) innerhalb eines Maschinengestells (6) erstreckenden wendelartigen Transportstrecke, die sich aus geradlinigen Teillängen sowie aus als 180°-Wendebögen ausgebildeten bogenförmigen Teillängen zusammensetzt. Die Transportstrecke weist wenigstens zwei in Transportrichtung aneinander anschließende wendelartige Abschnitte (8,9) mit jeweils zwei als 180°-Wendebögen ausgebildeten gekrümmten Teillängen auf.

Fig.1

EP 0 501 302 A1

Die Erfindung bezieht sich auf eine Vorrichtung gemäß Oberbegriff Patentanspruch 1.

Vorrichtungen dieser Art sind insbesondere zum Überkopf-Ausspülen (Rinsen) von Flaschen oder dergleichen Behälter bekannt, wobei dann entlang der Transportstrecke, d. h. an verschiedenen Teillängen dieser Transportstrecke unterschiedliche Behandlungszonen vorgesehen sind.

Vorrichtungen der eingangs erwähnten Art sind aber auch als sogenannte "Kopfraumsterilisatoren" bekannt, die gewöhnlich nach der Heißabfüllung von flüssigem Füllgut in Flaschen eingesetzt werden. Die jeweils verschlossenen Flaschen werden hierbei entlang der Transportstrecke um 180° gewendet, so daß die verschlossenen Flaschen auf einer Teillänge der Transportstrecke überkopf, d. h. mit der verschlossenen Mündung nach unten weisend angeordnet sind. Das heiße Füllgut bewirkt dann eine Sterilisation der Mündung sowie vor allem auch der Innenseite der Verschlusses.

Insbesondere dann, wenn eine hohe Durchlaufleistung (behandelte Flaschen je Zeiteinheit) angestrebt ist, benötigen bekannte Vorrichtungen eine große Baulänge, um die erforderliche Mindest-Behandlungszeit sicherzustellen bzw. das angestrebte Behandlungsergebnis zu erreichen. Dies gilt insbesondere auch dann, wenn bei bekannten, als Rinser ausgebildeten Vorrichtungen zur Vereinfachung der Konstruktion auf eine mitgeführte Spritzung, d. h. auf mit den Flaschen oder dergleichen Behältern mitgeführte Spritzelemente usw. verzichtet werden soll. Durch den Verzicht auf eine mitgeführte Spritzung ergibt sich zwar eine Vereinfachung der Konstruktion, es muß aber eine gewisse Verringerung der Effektivität der Spritzung und damit verbunden eine gewisse Erhöhung der Behandlungsdauer in Kauf genommen werden.

Aufgabe der Erfindung ist es, eine Vorrichtung der gattungsmäßigen Art dahingehend weiterzubilden, daß sie trotz geringer Baulänge bei hoher Durchlaufleistung eine optimale Behandlung sicherstellt.

Zur Lösung dieser Aufgabe ist eine Vorrichtung entsprechend dem kennzeichnenden Teil des Patentanspruches 1 ausgebildet.

Bei einer bevorzugten Ausführungsform ist die erfindungsgemäße Vorrichtung ein Rinser bzw. Heißrinser mit mehreren an der Transportstrecke gebildeten Behandlungszonen mit unterschiedlicher Temperatur, wobei die Behandlungszonen mit den höheren Temperaturen, die bevorzugt von der letzten Behandlungszone, in der die Flaschen mit heißem Frischwasser ausgespritzt werden, sowie von einer vorausgehenden Behandlungszone gebildet sind, bei der die Flaschen an ihrem Flaschenhals, Flaschenrumpf und Flaschenboden mit heißem Wasser außen abgespritzt werden, ausschließlich an einem in Transportrichtung auf den ersten wendelförmigen Abschnitt folgenden zweiten wendelförmigen Abschnitt der Transportstrecke vorgesehen. An diesem zweiten wendelförmigen Abschnitt, der die Auslaufstelle aufweist, ist dann auch die Abtropfzone vorgesehen. Diese spezielle Ausbildung gestattet u. a. eine optimale termische Trennung der einzelnen Behandlungszonen sowie des in diesen Behandlungszonen anfallenden Wassers mit unterschiedlicher Temperatur insbesondere auch dahingehend, daß für eine optimale Energieausnutzung das an einer Behandlungszone höhere Temperatur anfallende und dort nicht mehr benötigte Wasser auf möglichst kurzem Wege ausschließlich der Behandlungszone mit der nächst niedrigeren Temperatur zugeführt wird.

Durch die beiden wendelartigen Abschnitte der Transportstrecke ist es auch möglich, die Flaschen mit ihrer Mündung nach oben weisend zu behandeln, und zwar auf der waagrechten, unteren Teillänge der Transportstrecke am Übergang zwischen dem ersten und dem zweiten wendelartigen Abschnitt. Mit der erfindungsgemäßen Vorrichtung somit zusätzlich zum Überkopf-Behandeln auch ein Behandeln von Flaschen oder dergleichen Behältern in Normallage, d.h. mit der Mündung nach oben möglich.

Bei einer bevorzugten Ausführungsform der Erfindung sind an den geradlinigen Teillängen, aber auch an den gekrümmten bzw. gebogenen Teilllängen der Transportstrecke Gleitführungen, vorzugsweise solche aus Kunststoff, für die Klemmbackenketten vorgesehen. Bevorzugt weisen an der in Transportrichtung letzten gekrümmten Teillänge der Transportstrecke die dortigen Führungen für die die Flaschen mitführenden Trume der Klemmbackenketten ein Umlenkrad auf, um hierdurch die für die Bewegung der Klemmbackenketten erforderliche Kraft zu reduzieren. Die Verwendung derartiger Umlenkräder ist dort problemlos möglich, da in der dieser letzten gekrümmten Teillänge vorausgehenden geradlinigen Teillänge der Transportstrecke bereits der Beginn der Abtropfzone vorgesehen ist.

Die erfindungsgemäße Vorrichtung hat auch bei ihrer Ausbildung als Kopfraumsterilisatoren u. a. den Vorteil, daß durch die beiden aneinander anschließenden wendelartigen Abschnitte der Transportstrecke bei vorgegebener Länge der Vorrichtung insgesamt eine lange Behandlungsstrecke und damit lange Behandlungsdauer erzielt werden. Weiterhin hat die erfindungsgemäße Vorrichtung bei Ausbildung als Kopfraumsterilisator den Vorteil, daß durch die zweimalige Behandlung mit dazwischen erfolgendem Wenden in der jeweiligen, mit dem heißen Füllgut gefüllten Flasche ein Flüssigkeitsaustausch in der Weise erfolgt, daß sich bei der zweiten Behandlung erneut heißes Füllgut im Bereich der verschlossenen, nach unten weisenden Mündung befindet.

Weiterbildungen der Erfindung sind Gegenstand der Unteransprüche.

Die Erfindung wird im folgenden anhand der Figuren an einem Ausführungsbeispiel näher erläutert. Es zeigen:

Fig. 1      in vereinfachter Darstellung und in Draufsicht eine Ausführungsform der erfindungsgemäßen Vorrichtung in Form eines Heiß-Rinsers;

Fig. 2      in schematischer Seitenansicht und in Einzeldarstellung die beiden wendelartigen Abschnitte der Transportstrecke, zusammen mit den jeweiligen Behandlungszonen, den zugehörigen Sammelbehältern bzw. Tanks für die Behandlungsflüssigkeiten und den zugehörigen Leitungen usw.;

Fig. 3      einen Schnitt entsprechend der Linie I-I der Fig. 1;

Fig. 4      einen Schnitt entsprechend der Linie II-II der Fig. 1;

Fig. 5      einen Schnitt entsprechend der Linie III-III der Fig. 3;

Fig. 6      einen Schnitt entsprechend der Linie IV-IV der Fig. 3;

Fig. 7      in Detaildarstellung und in Seitenansicht eine Strecke einer Teillänge der Transportstrecke am Ende des ersten wendelartigen Abschnitts bzw. am Übergang zum zweiten wendelartigen Abschnitt;

Fig. 8      in vereinfachter Darstellung eine Draufsicht auf Fig. 7.

Die in den Figuren dargestellte, als Heiß-Rinser bzw. Heiß-Rinsermaschine ausgebildete und zum Überkopf-Ausspülen von Flaschen 1 dienende Vorrichtung besitzt eine Einlaufstelle 2, der die zu behandelnden Flaschen 1 über einen Zuförderer 3 aufrechtstehend, d. h. mit ihrem Boden auf dem Zuförderer 3 aufstehend, zugeführt werden, sowie eine Auslaufstelle 4, an der die die Vorrichtung nach ihrer Behandlung wieder aufrechtstehend verlassenen Flaschen 1 von einem Abförderer 5 weggefördert werden.

Zwischen der Einlaufstelle 2 und der Auslaufstelle 4 ist innerhalb eines Maschinengestells 6, welches mit entsprechenden Wandelementen ein im wesentlichen geschlossenes Gehäuse bilden kann, eine Transportstrecke 7 für die Flaschen 1 ausgebildet, die sich aus zwei wendelartigen Abschnitten 8 und 9 zusammensetzt, auf denen die Flaschen 1 mittels eines noch näher zu beschreibenden Transporteurs in der in den Figuren jeweils durch den Pfeil A angegebenen Transportrichtung bewegt werden.

Im Bereich des Abschnittes 8, der die Einlaufstelle 2 aufweist, besitzt die Transportstrecke 7 zunächst eine horizontale untere Teillänge 10, daran in Transportrichtung A anschließend eine Teillänge 11, die als Wendebogen um eine horizontale Achse halbkreisförmig gekrümmt ist, daran anschließend eine geradlinig verlaufende obere horizontale Teillänge 12 daran anschließend eine als Wendebogen ausgebildete halbkreisförmig gekrümmte Teillänge 13 und daran anschließend eine horizontale untere Teillänge 14. Im Bereich der Teillänge 14 geht der Abschnitt 8 in den Abschnitt 9 über, d. h. die Teillänge 14 ist gleichzeitig eine Teillänge des Abschnittes 9 und an die Teillänge 14 schließt sich eine der Teillänge 11 entsprechende und als Wendebogen ausgebildete Teillänge 15 an. Auf diese folgt dann die der Teillänge 12 entsprechende horizontale Teillänge 16, die in die der Teillänge 13 entsprechende halbkreisförmig gekrümmte Teillänge 17 übergeht, an welche schließlich die untere, horizontale Teillänge 18 anschließt, die auch die Auslaufstelle 4 bildet.

Um die Flaschen 1 auf dieser doppelwendelartigen Transportstrecke 7 zu bewegen, sind zwei in sich geschlossene und endlos umlaufend angetriebene Klemmbackenketten 19 vorgesehen, die jeweils unmittelbar aneinander anschließend eine Vielzahl von Klemmbacken 20 aufweisen und entlang der Transportstrecke 7 so geführt sind, daß jede Klemmbackenkette 19 ein belastetes, d.h. die Flaschen 1 mitführendes Trum 19' und ein nicht belastetes Trum 19'' bildet. Entlang der gesamten Transportstrecke 7 sind die beiden Klemmbackenketten 19 mit ihren Trumen 19' bzw. mit den dort vorgesehenen Klemmbacken 20 in horizontaler Richtung und quer zur Transportrichtung A einander gegenüberliegend in einem Abstand derart vorgesehen sind, daß die Flaschen 1 zwischen den Klemmbacken 20 der beiden Trume 19' festgeklemmt bzw. eingespannt sind.

An der Einlaufstelle 2 sowie an der Auslaufstelle 4 sind die beiden Klemmbackenketten 19 über Umlenkungen bildende Kettenräder 21 geführt, von denen jeweils zwei an der Einlaufstelle 2 und an der Auslaufstelle 4 vorgesehen sind. Sämtliche Kettenräder 21 sind über Getriebe 22 von einem Maschinenantrieb 23 angetrieben.

Zum Führen der Trumen 19' und 19'' an den geradlinigen Teillängen 10, 12, 14, 16 und 18 der Transportstrecke 7 ist für jede Klemmbackenkette 19 jeweils ein im wesentlichen geradliniges Führungselement 24 vorgesehen, das aus zwei hochkant angeordneten, flachen Trägern 25 aus korrosionsbeständigem Stahl und aus zwei an den Trägern 25 vorgesehenen geradlinigen Führungsschienen 26 aus Kunststoff besteht. Jede Führungsschiene 26 bildet mit einer Ausnehmung 27 einen sich in Transportrichtung erstreckenden Führungsschlitz mit Hinterschneidungen, in welchen die Klemmbackenkette 19 durch diese Hinterschneidungen hintergreifende Kettenelemente formschlüssig geführt ist. Die Träger 25 jedes einer Klemmbackenkette 19 zugeordneten Führungselementes 24 sind durch mehrere, in Transportrichtung A aufeinander folgende Distanzstücke 28 miteinander verbunden und bilden somit mit diesen Distanzstücken 28 eine relativ starre, leiter- oder fachwerkartige Struktur, die insbesondere auch in der Lage ist, die für das Einspannen der Flaschen 1 zwischen den Trumen 19' notwendigen Kräfte aufzunehmen.

An den gekrümmten Teillängen 11, 13 und 15 der Transportstrecke 7 sind für die Klemmbackenketten 19, d. h. für jedes Trum 19' und 19'' jeder Klemmbackenkette 19 Führungselemente 29 vorgesehen. Die Führungselemente 29 bestehen jeweils aus in vertikalen parallelen Ebenen angeordneten Platinen 30 aus korrosionsbeständigem Stahl. Auf einer Seite jeder Platine 30 ist eine halbkreisförmig gekrümmte Führungsschiene 31 vorgesehen, die wiederum aus Kunststoff hergestellt ist und in ihrem Querschnittsprofil der Führungsschiene 26 entspricht. Die beiden, jeweils einer Klemmbackenkette 19 zugeordneten Platinen 30 eines Führungselementes 29 sind durch mehrere Distanzstücke 28 und 28' in einem vorgegebenen Abstand fest miteinander verbunden.

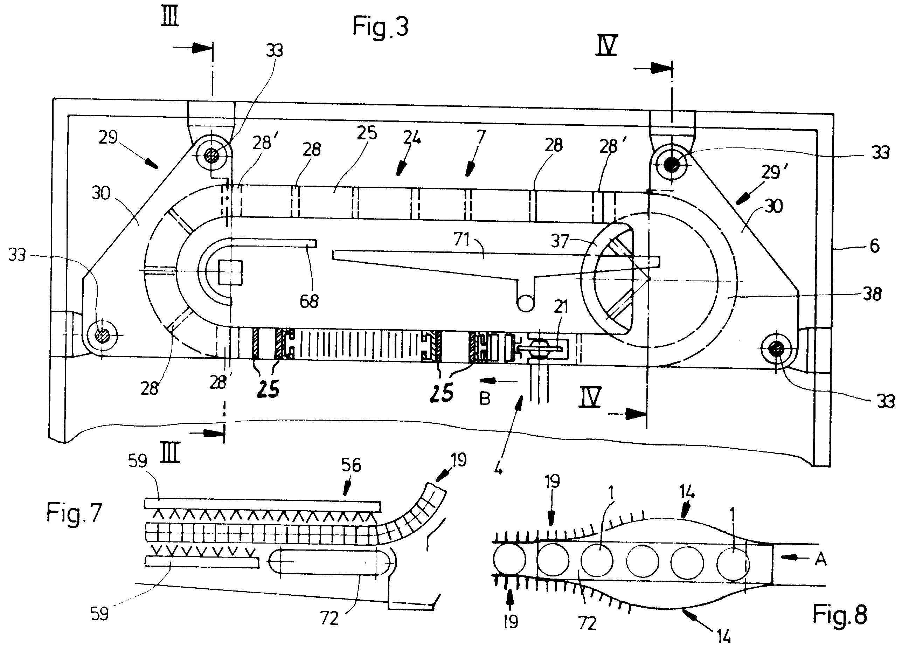

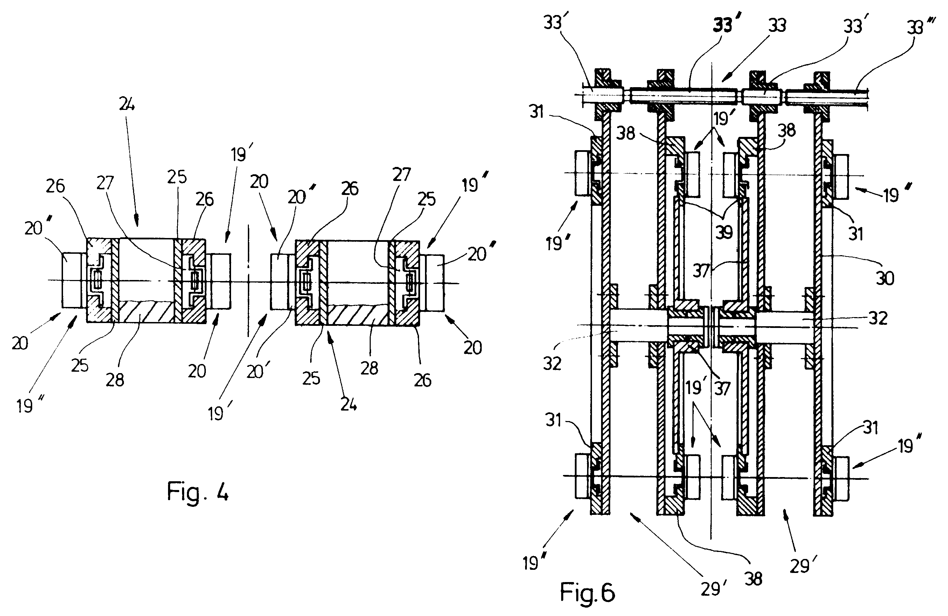

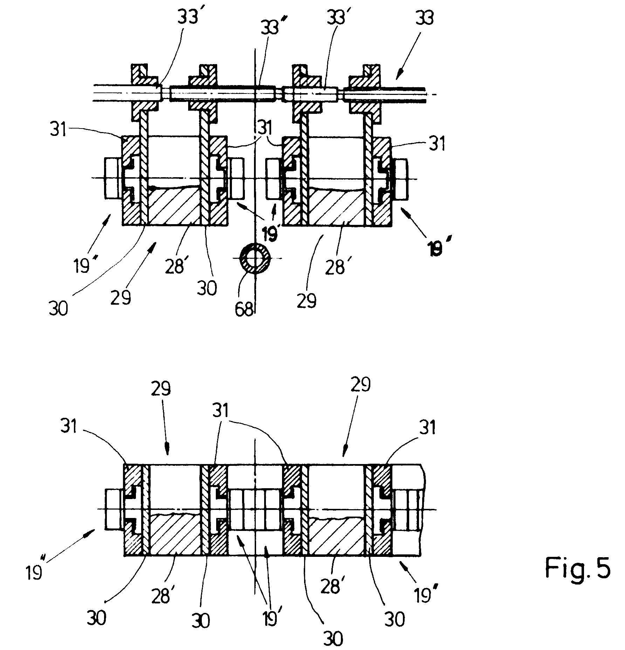

Wie insbesondere die Figuren 3 und 5 zeigen, sind die Platinen 30 jeweils an mehreren horizontalen und quer zur Transportrichtung A angeordneten Einstellspindeln 33 gehalten, und zwar bei der für die Fig. 5 gewählten Darstellung von den beiden äußeren Platinen 30 die linke Platine und von den beiden mittleren Platinen 30 die rechte Platine jeweils axial verschiebbar an einem gewindelosen Abschnitt 33' und die beiden restlichen Platinen 30, d. h. bei der Darstellung der Fig. 5 von den inneren Platinen 30 die linke und von den äußeren Platinen 30 die rechte jeweils mit einem Muttergewindestück an einem Gewindeabschnitt 33'' bzw. 33'''. Die Gewinde der Abschnitte 33'' und 33''' sind gegenläufig ausgebildet, so daß durch Drehen der Einstellspindel 33 der Abstand zwischen den beiden inneren Platinen 30 und damit der Abstand zwischen den beiden Führungselementen 29 bzw. Trumen 19' der Klemmbackenketten 19 zum Anpassen an den Durchmesser der Flaschen 1 verstellt werden kann, und zwar unter Beibehaltung der Mitte.

Wie in der Fig. 6 dargestellt ist, sind bei der letzten gekrümmten Teillänge 17 anstelle der Führungselemente 29 zwei Führungselemente 29' vorgesehen, die sich von den Führungselementen im wesentlichen dadurch unterscheiden, daß für die Trume 19' der beiden Klemmbackenketten 19 nicht die Gleitführung bzw. Gleitschiene 31, sondern jeweils eine Führung vorgesehen ist, die aus einem Umlenkrad 37, welches um die horizontale Krümmungsachse der Teillänge 17 frei drehbar vorgesehen ist, sowie aus einem äußeren, das Umlenkrad 37 auf einer Winkellänge von etwa 180° umschließenden Führungsbogen 38 besteht, welch letzterer von dem äußeren, ebenfalls an einer Platine 30 befestigten Profilelement der Führungsschiene 31 gebildet ist. Das Umlenkrad 37 ist an seinem Außenumfang mit einem beispielsweise aus Kunststoff hergestellten Ring 39 versehen. Der Außendurchmesser des Rades 37 bzw. des Ringes 39 und der innere Durchmesser des Führungsbogens 38 sind so aufeinander abgestimmt, daß zwischen dem Ring 39 und dem Führungsbogen 38 ein kreisbogenförmiger Schlitz gebildet ist, der dem Führungsschlitz der Führungsschiene 31 entspricht und in welchem das jeweilige Trum 19' durch Hintergreifen von Hinterschneidungen, die vom Ring 39 und vom Führungsbogen 38 gebildet sind, gehalten ist. Zur Lagerung des jeweiligen Umlenkrades 37 dient eine Verlängerung eines Lagerbolzens 32, der in den beiden Platinen 30 des Führungselementes 29' befestigt ist. Durch die vom Umlenkrad 37 und dem Führungsbogen 38 gebildete Führung bzw. Umlenkung wird eine erhebliche Reduzierung der für die Bewegung der Klemmbackenkette 19 benötigten Kraft bzw. Antriebsleistung erreicht.

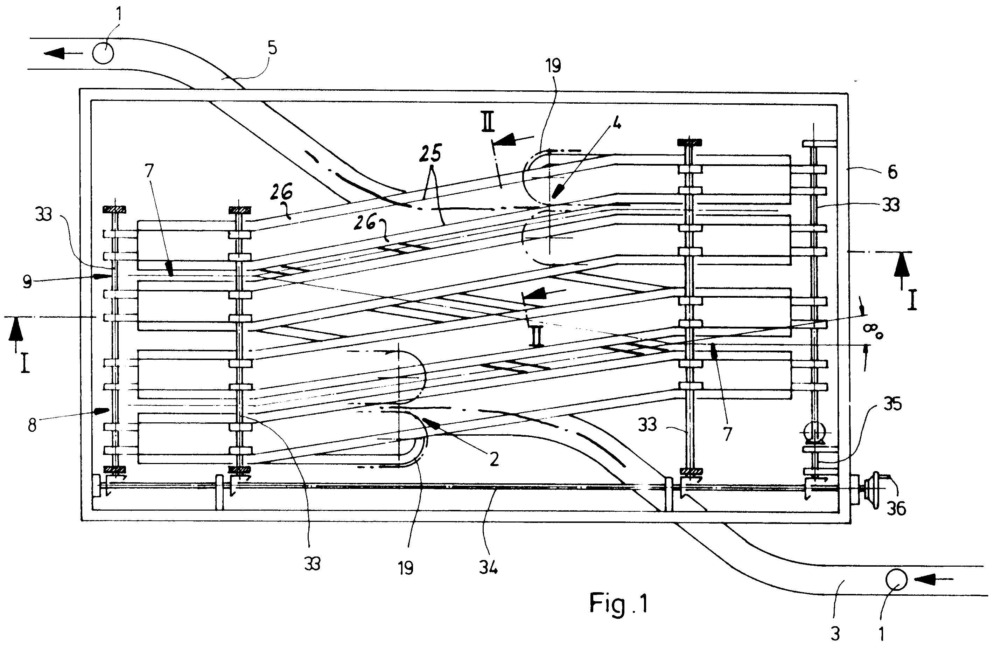

Über die klotzartigen Distanzstücke 28' sind die Führungselemente 24 an den Führungselementen 29 bzw. an den Platinen 30 derart befestigt, daß nicht nur die von den Führungselementen 24 gebildete Kettenführung übergangslos in die von den Führungselementen 29 gebildete Kettenführung übergeht, sondern die Führungselemente 24 zusammen mit den Führungselementen 29 verstellt werden. Durch einen Antrieb, der mehrere Antriebswellen aufweist, von denen in der Fig. 1 die Wellen 34 und 35 bezeichnet sind, können sämtliche Einstellspindeln 33 mittels einer Handkurbel 36 gemeinsam verstellt werden.

Selbstverständlich ist es auch möglich, die Verstellung der Führungselemente 29 auf andere Weise als beschrieben vorzunehmen, insbesondere ist es auch möglich, die beiden einander zugewandten Platinen 30 der beiden Führungselemente 29 bzw. 29' mit Muttergewindestücken auf Gewindeabschnitten der jeweiligen Verstellspindel vorzusehen.

Wie die Fig. 1 zeigt, sind die Führungselemente 29 bzw. 29' bzw. die diese Führungselemente bildenden Platinen 30 in vertikalen Ebenen parallel zueinander und parallel zu den Längsseiten des Maschinengestells 6 vorgesehen, während sich die Führungselemente 24 schräg zu den vertikalen Ebenen der Platinen 30 erstrecken, und zwar in einem Winkel, der etwa 8° beträgt.

Die Klemmbackenketten 19 sind kurvengängige Rollenketten aus einem korrosionsbeständigen Material mit ebenfalls aus diesem korrosionsbeständigen Material hergestellten Mitnehmerplatten 20' die Teil der Klemmbacken sind und auf denen leicht auswechselbar elastische Klemmbackenelemente 20'' befestigt sind.

Um eine möglichst gleichmäßige Spannung der beiden Klemmbackenketten 19 zu erreichen, sind die Kettenräder 21 jeweils auf einem in Transportrichtung verschiebbaren Schlitten angeordnet. Jeder Schlitten ist durch eine Feder im Sinne eines Spannens der jeweiligen Klemmbackenkette 19 vorgespannt, wie dies in der Fig. 3 mit dem Pfeil B angedeutet ist. Jedem Schlitten ist ein Signalgeber zugeordnet, der dann, wenn Schlitten in Richtung des Pfeiles B über den gesamten maximalen Spannweg bewegt worden ist, d. h. ein weiteres spannen der Klemmbackenkette 19 im Bereich eines Kettenrades 21 nicht mehr möglich ist, die Abschaltung der Vorrichtung bzw. des Maschinenantriebs 23 bewirkt. Diese Abschaltung wird dann beispielsweise auf dem Bedienerpult durch ein optisches Signal signalisiert. Die Vorrichtung kann erst wieder gestartet werden, wenn die betreffende Klemmbackenkette 19 entsprechend gekürzt wurde und somit das Signal des betreffenden Signalgebers nicht mehr anliegt.

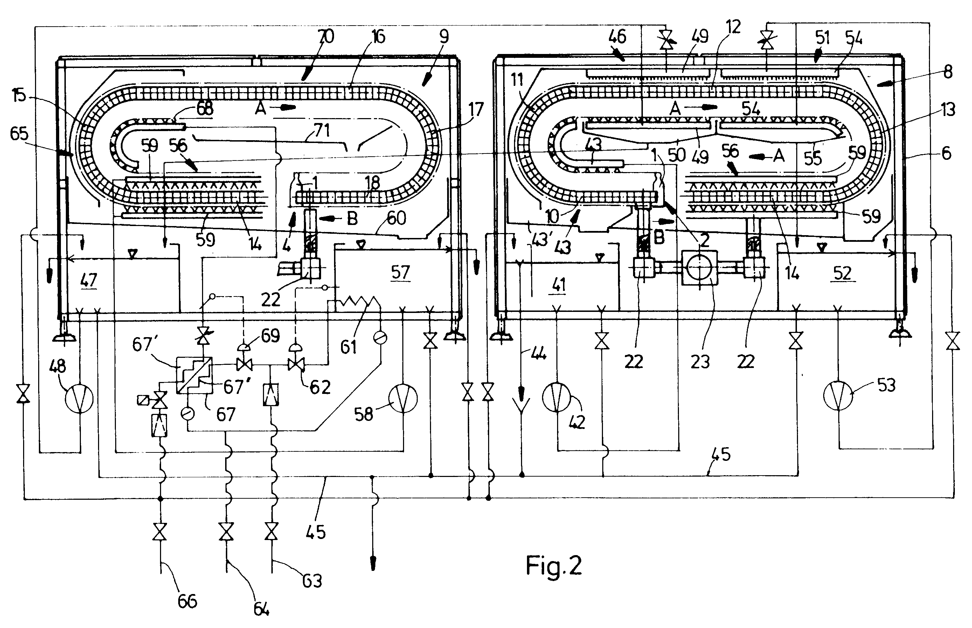

Wie insbesondere die Fig. 2 zeigt, sind entlang der Transportstrecke 7 die unterschiedlichsten Behandlungszonen vorgesehen, in denen das Behandeln der Flaschen 1 in mehreren Stufen über feststehende Spritzungen erfolgt, nämlich:

### Behandlungszone 40

In dieser Behandlungszone, die zum Anwärmen der Flaschen 1 auf ca. 30 °C dient, erfolgt eine Innenspritzung der Flaschen 1 mit Umwälzwasser mit einer Temperatur von etwa 30 °C.Weiterhin erfolgt in der Behandlungszone 40 auch eine leichte Außenüberschwallung der Flaschen 1.

Die Behandlungszone 40 ist entlang der Teillänge 10, insbesondere aber auch entlang der gekrümmten Teillänge 11 der Transportstrecke ausgebildet. Das Wasser wird aus dem Tank 41 mittels einer Pumpe 42 an die Spritzelemente 43 gefördert und anschließend aus einer Auffangwanne 43' in den Tank 41 zurückgeleitet. Überschüssiges Wasser im Tank 41 gelangt über eine Überlaufleitung 44 an eine Abwasserleitung 45 zum Abführen von Abwasser.

### Behandlungszone 46

An die Behandlungszone 40 schließt sich die Behandlungszone 46 zum Vorwärmen der Flaschen 1 auf ca. 40 °C an. In dieser Behandlungszone erfolgt eine Innen- und Außenspritzung der Flaschen 1 mit Umwälzwasser von ca. 40 °C. Das Wasser wird aus einem Tank 47 mittels einer Pumpe 48 an die Spritzelemente 49 für die Außen- und Innenspritzung gefördert und fließt über eine Auffangwanne wieder in den Tank 47 zurück. Überschüssiges Wasser aus dem Tank 47 wird dem Tank 41 zugeführt.

### Behandlungszone 51

In dieser, sich an die Behandlungszone 46 anschließende Behandlungszone 51 (erste Hochheizzone) erfolgt eine erste Behandlung der Flaschen 1 mit höherer Temperatur, d. h. eine Innen- und Außenspritzung der Flaschen 1 mit Umwälzwasser mit einer Temperatur von ca. 60 °C. Das Wasser wird aus einem Tank 52 mittels einer Pumpe 53 an die Spritzelemente 54 für die Außen- und Innenspritzung geleitet und fließt nach dem Behandeln der Flaschen 1 über eine Auffangwanne 55 in den Tank 52 zurück. Überschüssiges Wasser aus dem Tank 52 wird in den Tank 47 geleitet. Ebenso wie die Behandlungszone 46 ist auch die Behandlungszone 51 im wesentlichen an der Teillänge 12 vorgesehen.

### Behandlungszone 56

Diese, sich an die Behandlungszone 51 anschließende Behandlungszone 56 bildet die zweite Hochheizzone, in der eine Behandlung der Flaschen 1 mit einem Wasser mit etwa 80 °Cerfolgt, d. h. insbesondere eine Außenspritzung der Flaschen 1 am Hals, Rumpf und Boden mit Umwälzwasser von ca. 80 °C. Die Behandlungszone 56 erstreckt sich über die gesamte Teillänge 14 der Transportstrecke. Das Wasser wird aus dem Tank 57 über eine Pumpe 58 an die Spritzelemente 59 gefördert und gelangt nach dem Behandeln der Flaschen 1 über eine Auffangwanne 60 zurück an den Tank 57. Überschüssiges Wasser des Tankes 57 wird an den Tank 52 geleitet. Zum Beheizen des Tankes 57 ist in diesem ein Heizrohr 61 vorgesehen, welches über ein Steuer- oder Regelventil 62 immer dann mit einem über eine Leitung 63 zugeführten Wasserdampf beaufschlagt wird, wenn die Temperatur des Tankes 57 unter einen vorgegebenen unteren Schwellwert sinkt. Nach dem Durchströmen des Heizrohres 61 gelangt der Wasserdampf bzw. kondensiertes Wasser an die Leitung 64, über die das kondensierte Wasser im Tank 57 zugeführt wird.

### Behandlungszone 65

In dieser sich an die Behandlungszone 56 anschließenden und im wesentlichen an der Teillänge 15 ausgebildeten Behandlungszone 65 erfolgt ein Innenausspritzen der Flaschen 1 mit heißem Frischwasser, welches etwa eine Temperatur von

95 °Caufweist. Das Frischwasser wird aus einer Frischwasserversorgungsleitung 66, welche beispielsweise das örtliche Wasserversorgungsnetz ist, entnommen und in einem Wärmetauscher 67 auf 95 °C erhitzt. Das erhitzte Frischwasser gelangt an die Spritzelemente 68, die radial innerhalb der kreisbogenförmigen Teillänge 15 der Transportstrecke 7 angeordnet sind. Nach der Behandlung der Flaschen 1 wird das heiße Wasser in der Auffangwanne 60 aufgefangen und an den Tank 57 für das Umwälzwasser mit 80 °C geleitet. Der Wärmetauscher 67 besitzt neben dem vom Frischwasser durchströmten Wärmetauscherelement 67' auch ein Wärmetauscherelement 67'', welches über ein Regel- oder Steuerventil 69 mit Wasserdampf derart beaufschlagt wird, daß das Frischwasser am Ausgang des Wärmetauschers 67 die erforderliche Temperatur aufweist. Das im Wärmetauscherelement 67'' anfallende Kondensat wird ebenfalls über die Leitung 64 an den Tank 67 geleitet.

Behandlungs- bzw. Abtropfzone 70

An die Behandlungszone 65 schließt sich die Behandlungszone 70 an, die eine Abtropfzone bildet und sich im wesentlichen entlang der Teillänge 16, aber auch noch entlang der Teillängen 17 und 18 erstreckt. Das von den behandelten Flaschen 1 in der Behandlungs- bzw. Abtropfzone 70 abtropfende Wasser wird zum größten Teil in der Auffangwanne 71 aufgefangen und an den Tank 57 geleitet.

Durch die Ausbildung der Transportstrecke 7 als zweifache Wendel, d. h. durch die beiden Abschnitte 8 und 9 können bei kleinen Außen- bzw. Längenabmessungen der Maschine bzw. Vorrichtung die Behandlungszonen 40, 46, 51, 56, 65 und 70 relativ lang ausgeführt werden, und zwar insbesondere auch deswegen, weil die bogenförmig gekrümmten Teillängen der Transportstrecke 7 zumindest teilweise ebenfalls als Behandlungszonen genutzt sind. Die Ausführung der Transportstrecke als Zweifachwendel hat insbesondere aber auch den Vorteil, daß die Behandlungszonen höherer Temperatur, d. h. die Behandlungszonen 56 und 65 im wesentlichen im Abschnitt 9 der Transportstrecke 7 also räumlich getrennt von den Behandlungszonen 40, 46 und 51 mit niedrigerer Temperatur vorgesehen werden können, so daß es insbesondere auch möglich ist, bei langen Behandlungszonen ein optimales Auffangen und Trennen des an diesen Behandlungszonen anfallenden Wassers mit sehr unterschiedlicher Temperatur zu erreichen. Ebenso wie die vorbeschriebene Weiterleitung des in einem Tank anfallenden überschüssigen Wassers an den Tank der nächst niedrigeren Temperatur trägt auch dies wesentlich zu einer optimalen Ausnutzung der zugeführten Wärmemenge sowie auch dazu bei, daß das anfallende und von der Vorrichtung abzuführende Abwasser eine möglichst niedrige Temperatur besitzt.

Die Figuren 7 und 8 zeigen noch eine Besonderheit der Behandlungszone 56 bzw. der Teillänge 14. Am Beginn dieser Behandlungszone sind die beiden Führungselemente 24 so ausgebildet, daß sich die beiden Trume 19' der Klemmbackenketten 19 auf einer kurzen Strecke 14' zur kurzzeitigen Freigabe der Flaschen 1 auseinander bewegen, wie dies in der Fig. 8 dargestellt ist. Die Flaschen 1 stehen dann mit ihrem Boden auf dem oberen Trum eines synchron mit den Klemmbackenketten 19 endlos umlaufend angetriebenen Förderbandes 72 auf, mit dem die freigegebenen Flaschen 1 in Transportrichtung A weiterbewegt werden. Durch die Freigabe der Flaschen 1 an der Strecke 14' ist eine Behandlung der Flaschen 1 an der gesamten Außenfläche möglich.

Die Erfindung wurde voranstehend an einem Ausführungsbeispiel beschrieben. Es versteht sich, daß Abwandlungen sowie Änderungen möglich sind, ohne daß dadurch der die Erfindung tragende Erfindungsgedanke verlassen wird.

Aufstellung der verwendeten Bezugszeichen

| | |
|---|---|
| 1 | Flasche |
| 2 | Einlaufstelle |
| 3 | Zuförderer |
| 4 | Auslaufstelle |
| 5 | Abförderer |
| 6 | Maschinengestell |
| 7 | Transportstrecke |
| 8 | Abschnitt |
| 9 | Abschnitt |
| 10 - 18 | Teillänge |
| 14' | Strecke |
| 19 | Klemmbackenkette |
| 19', 19'' | Trum |
| 20 | Klemmbacken |
| 20' | Mitnehmerplatte |
| 20'' | Klemmbackenelement |
| 21 | Kettenrad |
| 22 | Getriebe |
| 23 | Maschinenantrieb |
| 24 | Führungselement |
| 25 | Träger |
| 26 | Führungsschiene |
| 27 | Ausnehmung |
| 28, 28' | Distanzstück |
| 29, 29' | Führungselement |
| 30 | Platine |
| 31 | Führungsschiene |
| 32 | Lagerbolzen |
| 33 | Einstellspindel |
| 33', 33'', 33''' | Abschnitt |
| 34 | Welle |

| | |
|---|---|
| 35 | Welle |
| 36 | Handkurbel |
| 37 | Rad |
| 38 | Führungsbogen |
| 39 | Ring |
| 40 | Behandlungszone |
| 41 | Tank |
| 42 | Pumpe |
| 43 | Spritzelemente |
| 43' | Auffangwanne |
| 44 | Überlaufleitung |
| 45 | Abwasserleitung |
| 46 | Behandlungszone |
| 47 | Tank |
| 48 | Pumpe |
| 49 | Spritzelement |
| 50 | Auffangwanne |
| 51 | Behandlungszone |
| 52 | Tank |
| 53 | Pumpe |
| 54 | Spritzelement |
| 55 | Auffangwanne |
| 56 | Behandlungszone |
| 57 | Tank |
| 58 | Pumpe |
| 59 | Spritzelement |
| 60 | Auffangwanne |
| 61 | Heizrohr |
| 62 | Regelventil |
| 63 | Leitung |
| 64 | Leitung |
| 65 | Behandlungszone |
| 66 | Versorgungsleitung |
| 67 | Wärmetauscher |
| 67', 67'' | Wärmetauscherelement |
| 68 | Spritzelement |
| 69 | Regelventil |
| 70 | Behandlungs- bzw. Abtropfzone |
| 71 | Auffangwanne |
| 72 | Förderband |

**Patentansprüche**

1. Vorrichtung zum Überkopf-Behandeln von Flaschen oder dergleichen Behälter, insbesondere Rinser oder Kopfraum-Sterilisator, mit einem zwischen einer Einlaufstelle (2) für die zu behandelnden Flaschen (1) und einer Auslaufstelle (4) für die behandelten Flaschen (1) umlaufenden und von wenigstens einem Paar von Klemmbackenketten (19) gebildeten Transportsystem zur klemmenden Mitnahme der Flaschen (1) auf einer sich zwischen der Einlaufstelle (2) und der Auslaufstelle (4) innerhalb eines Maschinengestells (6) erstreckenden wendelartigen Transportstrecke, die sich aus geradlinigen Teillängen (10, 12, 14, 16, 18) sowie aus als 180°-Wendebögen ausgebildeten bogenförmigen Teillängen (11, 13, 15, 17) zusammensetzt, dadurch gekennzeichnet, daß die Transportstrecke (7) wenigstens zwei in Transportrichtung (A) aneinander anschließende, wendelartige Abschnitte (8, 9) mit jeweils zwei als 180°-Wendebogen ausgebildeten gekrümmten Teillängen (11, 13; 15, 17) aufweist.

2. Vorrichtung nach Anspruch 1, dadurch gekennzeichnet, daß bei Ausbildung der Vorrichtung als Rinser an den Teillängen (10 -18) der Transportstrecke (7) Behandlungszonen (40, 46, 51) mit niedrigen Behandlungstemperaturen und Behandlungszonen (56, 65) mit höheren Behandlungstemperaturen vorgesehen sind, und daß ausschließlich die Behandlungszonen (56, 65) mit den höheren Behandlungstemperaturen an dem in Transportrichtung (A) zweiten wendelartigen Abschnitt (9) vorgesehen sind.

3. Vorrichtung nach Anspruch 2, gekennzeichnet durch ihre Ausbildung als Heiß-Rinser mit einer ersten Behandlungszone (40) mit einer Behandlungs- bzw. Wassertemperatur von ca. 30 °C, mit einer zweiten Behandlungszone (46) mit einer Behandlungs- bzw. Wassertemperatur von ca. 40 °C, mit einer dritten Behandlungszone (51) mit einer Behandlungs- bzw. Wassertemperatur von etwa 60 °C, mit einer vierten Behandlungszone (56) mit einer Behandlungs-bzw. Wassertemperatur von etwa 80 °C, mit einer fünften Behandlungszone (65) mit einer Wasser- bzw. Behandlungstemperatur von etwa 95 °C und mit einer in Transportrichtung (A) vor der Auslaufstelle (4) vorgesehenen Abtropfzone (70), wobei an dem in Förderrichtung (A) zweiten Abschnitt (9) der Transportstrecke (7) die vierte und fünfte Behandlungszone (56, 65) sowie die Abtropfzone (70) ausgebildet sind.

4. Vorrichtung nach Anspruch 3, dadurch gekennzeichnet, daß die erste Behandlungszone (40) als Anwärmstufe für eine Innenspritzung der Flaschen (1) mit Umwälzwasser von ca. 30 °C ausgebildet ist, daß die zweite Behandlungszone (56) als Vorwärmstufe für eine Innen- und Außenspritzung der Flaschen (1) mit Umwälzwasser von ca. 40 °C ausgebildet ist, daß die dritte Behandlungszone (51) als erste Hochheizzone für eine Innen- und Außenspritzung der Flaschen (1) mit Umwälzwasser mit einer Temperatur von ca. 60 °C ausgebildet ist, daß die vierte Behandlungszone (56) als zweite Hochheizzone für eine Außenspritzung der Flaschen (1) insbesondere am Flaschenhals, Flaschenrumpf und Flaschenboden mit Umwälzwasser von ca. 80 °C ausgebildet ist, und daß die fünfte Behandlungszone (65) als Stufe zur Innen-Ausspritzung der Flaschen (1) mit einem Frischwasser mit 95 °C ausgebildet ist.

5. Vorrichtung nach einem der Ansprüche 1 bis 4, dadurch gekennzeichnet, daß wenigstens eine Behandlungszone (40, 51, 65) wenigstens teilweise entlang einer gekrümmten Teillänge (11, 13, 15) der Transportstrecke (7) ausgebildet ist.

6. Vorrichtung nach einem der Ansprüche 1 bis 5, dadurch gekennzeichnet, daß die geradlinigen Teillängen (10, 12, 14, 16, 18) der Transportstrecke (7) mit der vertikalen Ebene, in der eine angrenzende gekrümmte Teillänge (11, 13, 15, 17) der Transportstrecke (7) angeordnet ist, einen Winkel kleiner als 10°, vorzugsweise einen Winkel von 8° einschließt.

7. Vorrichtung nach einem der Ansprüche 1 bis 6, dadurch gekennzeichnet, daß im Bereich der geradlinigen Teillängen (10, 12, 14, 16, 18) für die Klemmbackenketten (19) bzw. deren Trume (19', 19'') Gleitführungen (26) bildende erste Führungselemente (24) vorgesehen sind.

8. Vorrichtung nach Anspruch 7, dadurch gekennzeichnet, daß jedes erste Führungselement (24) aus zwei sich in Transportrichtung (A) erstreckenden ersten Trägern (25) besteht, die an ihren einander abgewandten Seiten die Gleitführungen (26) für die beiden Trume (19', 19'') einer Klemmbackenkette (19) aufweisen.

9. Vorrichtung nach Anspruch 8, dadurch gekennzeichnet, daß die beiden, vorzugsweise als langgestreckte plattenförmige Elemente ausgebildeten ersten Träger (25) jedes ersten Führungselementes (24) durch mehrere Distanzstücke (28, 28') zu einer leiter- oder fachwerkartigen Struktur verbunden sind.

10. Vorrichtung nach einem der Ansprüche 1 bis 9, dadurch gekennzeichnet, daß an den gekrümmten Teillängen (11, 13, 15, 17) der Transportstrecke (7) zweite Führungselemente (29, 29') vorgesehen sind, die kreisbogenförmige Führungen für die Klemmbackenketten (19) bzw. deren Trume (19', 19'') bilden.

11. Vorrichtung nach Anspruch 10, dadurch gekennzeichnet, daß die zweiten Führungselemente (29, 29') jeweils von zwei zweiten Trägern oder Platinen (30) gebildet sind, die an ihren einander abgewandten Seiten die kreisbogenförmigen Führungen besitzen.

12. Vorrichtung nach Anspruch 10 oder 11, dadurch gekennzeichnet, daß die kreisbogenförmigen Führungen wenigstens teilweise Gleitführungen bildende Führungsschienen (31) sind.

13. Vorrichtung nach einem der Ansprüche 9 bis 11, dadurch gekennzeichnet, daß zumindest an der in Transportrichtung (A) letzten gekrümmten Teillänge (17) der Transportstrecke (7) die dortigen Führungen für die die Flaschen (1) transportierenden bzw. mitführenden Trume (19') der Klemmbackenketten (19) jeweils ein Umlenkrad (37) aufweisen.

14. Vorrichtung nach Anspruch 13, dadurch gekennzeichnet, daß das Umlenkrad (37) an einem Träger bzw. an einer Platine (30) gelagert und von einem an dieser Platine (30) befestigten Führungsbogen (38) umschlossen ist, und daß zwischen einem Umfangsbereich (39) des Umlenkrades (37) und dem Führungsbogen (38) ein Führungsspalt gebildet ist, in den Elemente der Klemmbackenkette (19) formschlüssig eingreifen.

15. Vorrichtung nach einem der Ansprüche 7 bis 14, dadurch gekennzeichnet, daß die Führungsschienen (31) und/oder der Führungsbogen (38) aus Kunststoff bestehen.

16. Vorrichtung nach einem der Ansprüche 1 bis 15, gekennzeichnet durch Mittel (33, 34, 35, 36) zur Einstellung bzw. Anpassung der Breite der Transportstrecke (7) an unterschiedliche Durchmesser der Flaschen (1).

17. Vorrichtung nach Anspruch 16, dadurch gekennzeichnet, daß die Mittel zum Einstellen mit den ersten und/oder zweiten Führungselementen (24, 29, 29') zusammenwirkende Einstellspindeln (33) aufweisen, die bevorzugt für eine die Mitte beibehaltende Einstellung ausgebildet sind.

18. Vorrichtung einem der Ansprüche 1 bis 17, dadurch gekennzeichnet, daß die Klemmbackenketten (19) an der Einlaufstelle (2) und an der Auslaufstelle (4) zur Umlenkung jeweils über wenigstens ein Kettenrad (21) geführt sind, und daß zur Erzielung einer gleichbleibenden Kettenspannung die Kettenräder (21) an der Einlaufstelle (2) und/oder an der Auslaufstelle (4) um einen vorgegebenen maximalen Spannweg bewegbar und durch wenigstens eine Feder vorgespannt sind, und daß für die vorgespannten Kettenräder (21) ein Signalgeber vorgesehen ist, der bei Erreichen des maximalen Spannweges ein Signal zum Abschalten der Vorrichtung und/oder zur Erzeugung einer Fehlermeldung abgibt.

19. Vorrichtung nach einem der Ansprüche 1 bis 18, dadurch gekennzeichnet, daß das an den Behandlungszonen (46, 51, 56, 65) anfallende Wasser kaskadenartig von Behandlungszone zu Behandlungszone derart weitergeleitet wird, daß das in einer Behandlungszone höherer Temperatur nicht mehr benötigte Wasser der Behandlungszone mit der nächst tieferen Temperatur zufließt.

20. Vorrichtung nach einem der Ansprüche 1 bis 19, dadurch gekennzeichnet, daß für die Erwärmung des Wassers der vierten Behandlungszone (56) in einem dieses Wasser enthaltenden Tank (57) eine mit Heißwasser oder Dampf betriebene Heizeinrichtung (61) vorgesehen ist, und daß das an einem Rücklauf der Heizeinrichtung (61) anfallende Wasser oder Kondensat einer Behandlungszone, vorzugsweise der vierten Behandlungszone (56) zugeführt wird.

21. Vorrichtung nach einem der Ansprüche 1 bis 20, dadurch gekennzeichnet, daß zum Erhitzen des der fünften Behandlungszone (65) zugeführten Frischwassers ein mit heißem Wasser oder Wasserdampf betriebener Wärmetauscher (67) vorgesehen ist, und daß das an einem Rücklauf des Wärmetauschers (67) anfallende Wasser bzw. Kondensat einer Behandlungszone, vorzugsweise der vierten Behandlungszone (56) zugeleitet wird.

22. Vorrichtung nach einem der Ansprüche 1 bis 21, dadurch gekennzeichnet, daß die ersten Führungselemente (24) für die die Flaschen (1) mitführenden Trume (19') an wenigstens einer Strecke (14') auf mindestens einer waagrechten unteren Teillänge (14) der Transportstrecke (7) so ausgebildet sind, daß dort die Flaschen (1) von den Klemmbackenketten (19) freigegeben werden, und daß im Bereich dieser Strecke (14') eine von einem Transportelement, vorzugsweise von einem Förderband (72) gebildete Standfläche für die Flaschen (1) vorgesehen ist.

23. Vorrichtung nach einem der Ansprüche 2 bis 22, gekennzeichnet durch ortsfest angeordnete Spritzelemente (43, 49, 54, 59, 68) an den Behandlungszonen.

Fig.1

Fig. 2

EP 0 501 302 A1

Fig.3

Fig.7

Fig.8

Fig.6

Fig. 4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 110 654 (SIMPLIMATIC ENGINEERING CY) <br> * Ansprüche; Abbildungen * <br> --- | 1,7-18 | B08B9/08 <br> B65G21/18 <br> B65G15/14 <br> //B08B101:08 |
| A | WO-A-8 102 567 (RIEDERER) <br> * Zusammenfassung; Abbildung 1 * <br> --- | 1,5 | |
| A | FR-A-1 114 257 (CAYROL) <br> * Seite 1, linke Spalte, Zeile 1 - Seite 2, linke Spalte, Absatz 3; Abbildungen * <br> --- | 1-6 | |
| A | FR-A-444 658 (CARPENTIER) <br> * das ganze Dokument * <br> --- | 1-6 | |
| A | DE-C-657 613 (WINTERWERB) <br> * das ganze Dokument * <br><br> ----- | 1-6 | |
| | | | **RECHERCHIERTE SACHGEBIETE (Int. Cl.5)** <br><br> B08B <br> B65G <br> B67C |

Der vorliegende Recherchenbericht wurde für alle Patentansprüche erstellt

| Recherchenort | Abschlußdatum der Recherche | Prüfer |
|---|---|---|
| DEN HAAG | 02 JUNI 1992 | DE SCHEPPER H.P. |